# EUROPEAN PATENT APPLICATION

(11) **EP 1 459 917 A1**
(43) Date of publication of application: **22.09.2004**
(21) Application number: 03251619.7
(22) Date of filing: 17.03.2003
(51) Int. Cl.: B60G 21/073, B60G 21/05, B60G 17/04, B60G 17/052, B60G 11/30, B62D 21/12, B62D 65/00

(54) **Vehicle frame component**

(71) Applicant: Meritor Light Vehicle Technology, LLC, Troy, Michigan 48084 (US)
(72) Inventor: Carlstedt, Robert P., Michigan 48306 (US); Whitney, Daniel Eugene, Massachusetts (US); Smith, Mark C., Michigan 48084 (US); Geib, Eric Stephen, Michigan 48430 (US); Foster, Stephen M., Michigan 48306 (US); Clisch, Richard M., Michigan 48187 (US); Shih, Shan, Michigan 48098 (US); Marcos Munoz, Juan Jose, 31180 Cizur Mayor (Navara) (ES); Chonavel, Sylvain, Harcourt, 14220 Thury (FR)
(74) Representative: Jones, John Bryn

(57) **Abstract**

Several embodiments are disclosed for incorporating suspension components into vehicle frame structures. Most preferably, the resulting structure is a modular combination of a frame and a suspension. Most preferably, the frame component extends along the lateral width of the vehicle and between the two wheels for the vehicle. The suspension components mounted within the frame may be mechanical springs or fluid springs. Moreover, various types of controls can be incorporated into this structure.

## Description

### BACKGROUND OF THE INVENTION

The present invention relates to a vehicle frame component. More particularly, but not exclusively, the present invention relates to the incorporation of suspension components in a vehicle frame element to reduce required space for the suspension components.

Vehicles are typically provided with suspensions including springs, both mechanical and fluid. The springs provide a bias support allowing movement of the vehicle wheels relative to the frame, with resistance to dampen any shock due to a road bump, etc. Typically, a number of arms connect the vehicle wheels to frame elements, with springs positioned between the arms and the frames.

Vehicles are being provided with more modular type frames. As an example, the engine is often mounted in an engine cradle module consisting of a plurality of generally tubular frame elements. Similarly, a rear frame module typically extends between the sides of the vehicle frame, and provides a mount location for the wheels. Again, this frame element includes generally tubular shaped structures. Various other types of modular supports, including corner sections, are known and utilized in modem vehicles.

In modem vehicle designs it would be desirable to reduce the number of separate components, and further to reduce the amount of required space. However, to date, the frame elements and the suspension components have been separate and have each required their own space.

### SUMMARY OF THE INVENTION

In a disclosed embodiment of this invention, a vehicle frame member preferably houses suspension components. The suspension components could be mechanical springs, fluid spring elements, air reservoirs, or other suspension components. The frame member could be any of a number of generally tubular structures. Tubular should not be interpreted as round for purposes of this application. The tubular structures could be rectangular. Most preferably, the frame member which houses the suspension members extends between the two lateral sides of the vehicle. Thus, a single frame member houses suspension components for each of the opposed vehicle wheels.

In a disclosed embodiment of this invention, the frame member could be a portion of the engine cradle. In another disclosed embodiment the frame member could be part of a rear modular frame. Further, in yet another embodiment the component is a comer module. The comer module would not have the feature wherein the frame member extends between the lateral sides of the vehicle.

In one further embodiment an entire front vehicle module could be provided which includes both the engine cradle, the vehicle fire wall, and the suspensions for both of the forward wheels. This embodiment would allow the provision of a good deal of the vehicle as a singular modular unit.

In some embodiments, the suspension elements housed in the tube are coil springs. In this embodiment, the shape of the frame member may preferably be of any known shape, and can be dictated more by the necessary function of the frame member. In other embodiments wherein fluid springs are housed within the frame element, it would be more desirable to have the frame element be circular. With this embodiment, it is preferable the bore in the frame element be circular as to facilitate the movement of the fluid piston.

These and other features of the present invention can be best understood from the following specification and drawings, the following of which is a brief description.

### BRIEF DESCRIPTION OF THE DRAWINGS

Figure 1 is a schematic view of a first embodiment.
Figure 2A is a side view of a second embodiment.
Figure 2B shows a top view of the Figure 2A embodiment.
Figure 3 shows yet another embodiment.
Figure 4 shows yet another embodiment.
Figure 5 shows mechanical features which can be incorporated into any of the Figures 1-4 embodiments.
Figure 6 shows a fluid arrangement which can be incorporated into any of the Figure 1-4 embodiments.
Figure 7 shows yet another fluid arrangement.
Figure 8A shows yet another fluid arrangement.
Figure 8B shows yet another fluid arrangement.
Figure 9 shows yet another fluid arrangement.
Figure 10 shows yet another fluid arrangement.
Figure 11 shows yet another fluid arrangement.

### DETAILED DESCRIPTION OF A PREFERRED EMBODIMENT

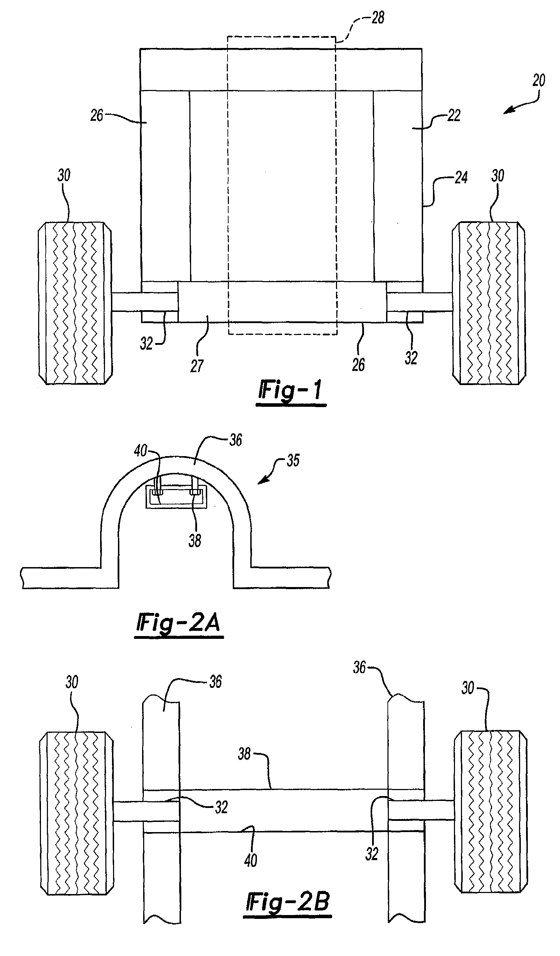

Figure 1 shows an embodiment 20 wherein an engine cradle 22 has a pair of longitudinally extending sides 24 and a laterally extending side 26. The laterally extending side 26 has an inner bore 27. That is, the side 26 is generally tubular and extends between the sides of the engine cradle 22. As shown schematically, an engine 28 is supported on the engine 22 cradle as known. In the prior art such engine cradles exist, and have sometimes received suspension components to mount a wheel 30. Further, the frame sides 26 have been generally elongate tubular components, but have never been utilized to house suspension components. Sides 26 are typically welded to sides 24.

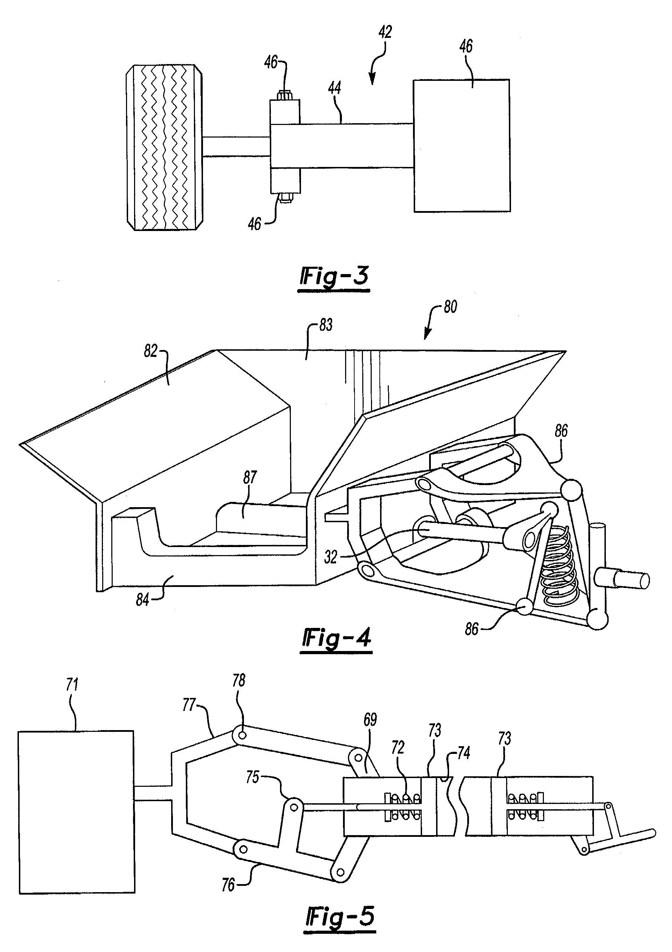

As shown schematically at 32, in the present invention suspension components are housed within the bore 27. The types of suspension components are shown extremely schematically in the figures 1-4, as the purpose of the first several figures are to show possible environmental locations for the frame members. Subsequent figures 5 and higher show examples of the types of suspension components which could be housed within the tubular frame members. Any of the first four figures could be the environment for the suspension components such as mounted with any of the suspension component embodiments illustrated in Figure 5 and higher.

Figure 2A shows another embodiment 35 wherein lateral sides 36 of the vehicle are bolted to a crossing rear modular frame 38. Again, the modular frame 38 may have an internal bore 40.

As shown in Figure 2B, the frame portion 38 extends between the wheels 30, and also between the two lateral sides 36 of the vehicle. Again, suspension elements 32 are mounted within bore 40.

Figure 3 shows yet another embodiment 42 which may be a comer module, and wherein the crossing member 44 is fixed, such as by bolting to frame members 46. The frame member 44 provides structural support for the vehicle frame, and houses a suspension component 32. Notably, in this embodiment the tubular frame member 44 does not extend across the lateral sides of the vehicle.

Figure 4 shows an embodiment 80 wherein side walls, known as the wheel house 82 of an engine mount including fire wall 83 and a radiator support 84 are all formed as a complete modular unit. Mounting arms 86 are mounted to the sides of the walls 82. A crossing frame component 87 crosses between the lateral sides of the system and has suspension components 32 mounted to the arms 86.

The above modular units are shown schematically, and are all generally known. In each of the embodiments it is the inclusion of suspension components within a generally tubular frame body which is inventive. The frame members are preferably removably attached, such as by bolting to the vehicle frame. However, welding or other attachments may be used.

As shown in Figure 5, coil over shock 72 are mounted within the bore 74 of frame 69, and connect into a member 75 to in turn connect through an arm 76, which is in turn connected to a knuckle 77, also connected to an upper arm 78. Again, all of this structure connects to a wheel 71. The inclusion of the coil over shock 72 into the frame 69 provides better space usage, and minimized the necessary space underneath the vehicle. A fixed frame 73 is welded into frame 69 as a base for the coil over shock. As is known, space under the vehicle is at a premium and the present invention thus provides very valuable benefits.

Further as shown in Figure 5, the frame component 69 extends between the two lateral sides of the vehicle, although only one side is showing detail in this figure. Although it is preferred the frame member extend between the lateral sides, single side frames such as a comer module and as shown schematically in Figure 3 may also benefit from this embodiment, and each of the following embodiments with appropriate modification.

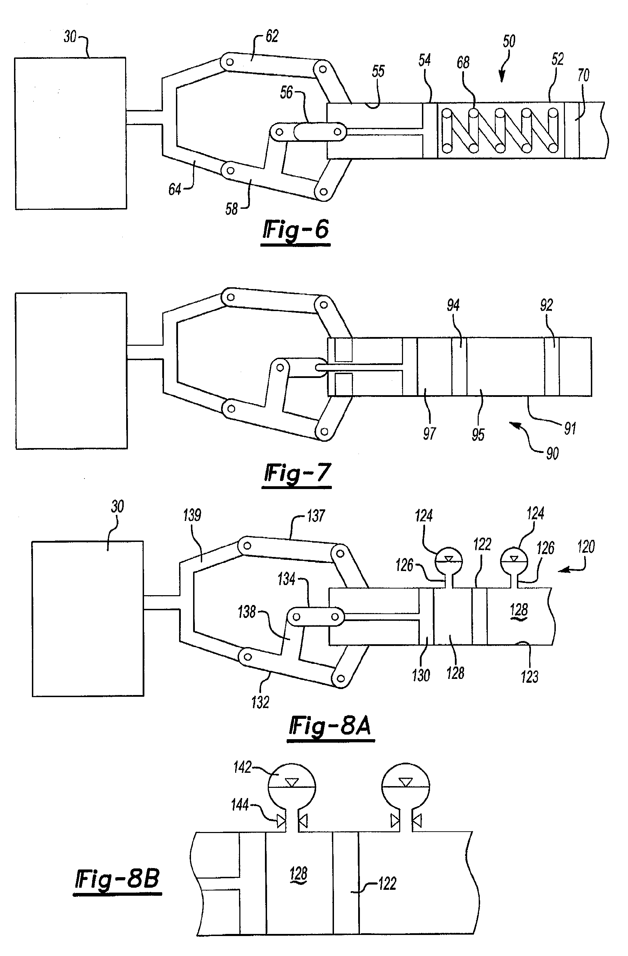

Figure 6 shows one half of an embodiment 50 wherein the crossing frame member 52 receives pistons 54. When used with fluid pistons 54 it is preferred the bore 55 of the frame member 52 be generally cylindrical. A linkage 56 and 58 connects the piston 54 to a knuckle 64 which is also connected to an upper arm 62. The knuckle 64 is in turn connected to a wheel 30. A spring 68 generally forces the pistons 54 outwardly. A divider 70 divides the two sides of the frame 52 between the two wheels.

As shown in the Figure 6, a seal A can define a fluid cylinder, such that hydraulic or pneumatic fluid can be received on both sides B and C of piston 54. This embodiment can also be utilized simply with atmospheric air pressure, and without the need for seals.

Figure 7 shows one half of an embodiment 90 having very similar structure including a divider 92. In this embodiment a floating piston 94 separates chambers 95 and 97. Chamber 95 preferably includes a resilient gas spring and chamber 97 preferably includes a hydraulic fluid. The function of such suspension components is generally as known, as it is the inclusion of such components into the frame element 91 which is inventive here.

Figure 8A shows an embodiment 120, wherein the dividing wall 122 separates the frame element 123 into the two sides as in the prior embodiments. A gas spring 124 communicates fluid through a tap 126 into a chamber 128 to control the fluid force on the piston 130. Again, a connection 132, 134, 137, 138 and 139 connects the piston 130 operatively to a wheel.

Figure 8B shows another embodiment very similar to the Figure 8A embodiment except an electronically controlled valve 144 is placed on the gas spring 142. In this way, the flow of fluid into the chamber 128 can be carefully controlled to achieve particular dynamic control.

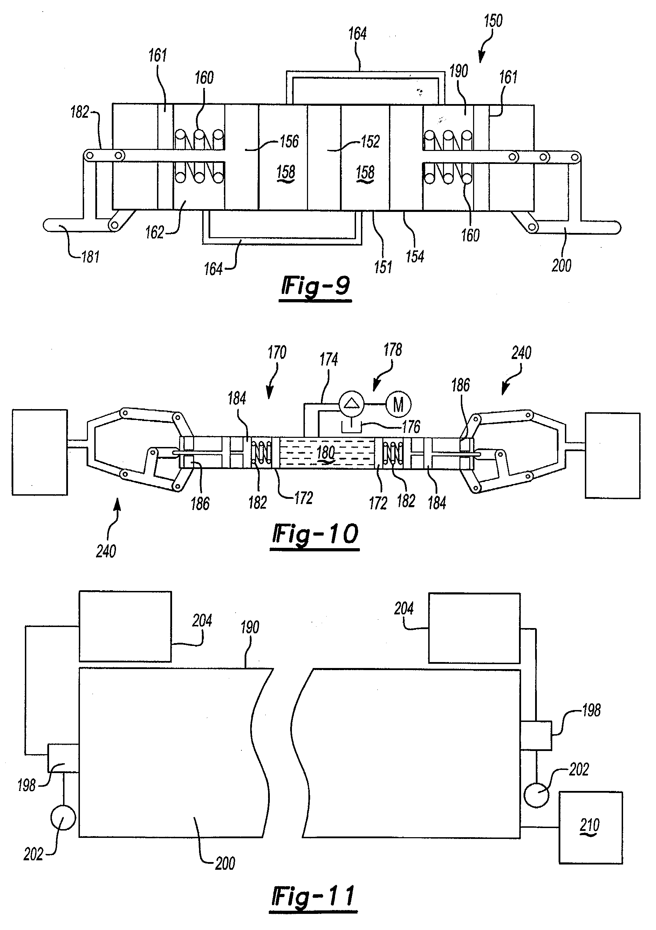

Figure 9 shows an embodiment 150 having opposed pistons 154 and 156 on each side of the frame element 151. A divider 152 divides the frame element 151 into two components. This embodiment provides control over vehicle roll as will be described. If an upward force on the left hand side lower control arm 181 is transmitted through the linkage 182 to the piston 156, the fluid in the chamber 158 is driven into the chamber 190 on the right hand side through the tube 164. This will drive the piston 154 to the left, in turn causing the control arm 200 on the right hand side to move upwardly in the same general direction as the control arm 181. At the same time, fluid from the piston chamber 158 associated with the right hand side of the Figure 9 embodiment is driven through its tube 164 into the chamber 162. Housing surfaces 161 provide a mount surface for a spring 160. As the control arms 181 and 200 are moved upwardly, the vehicle roll is leveled providing more stable maneuvering.

Figure 10 provides yet another embodiment 170 having floating pistons 172, springs 182, pistons 184, housing structures 186, and the associated linkages shown generally at 240 and such as are shown in the above embodiments. A control line 174 communicates with a chamber 180 between the pistons 172. A motor and pump 178 and a reservoir 176 selectively drive hydraulic fluid into the chamber 180.

This embodiment allows for control of vehicle height. An appropriate control could be utilized to decide when to move the vehicle and how much, and the motor and pump 178 is controlled in view of those goals. In this embodiment, the pump could actively control the suspension. In the specifically illustrated embodiment only a coil spring 182 is utilized in conjunction with the piston 172, however, a fluid controlled spring can also be utilized under this embodiment.

Figure 11 shows yet another embodiment wherein the frame 190 has its bore 200 provided as an air reservoir. Air is pumped from a compressor 210 into the bore 200 and stored. Valves 198 are under a control 202 to selectively deliver air to a suspension component 204 which utilizes compressed air. The suspension component and its use of air are as known. It is the storage of the air within frame element 190 which is inventive here.

Essentially the frame element is a structural frame element which provides structural support to the overall vehicle frame when mounted to other frame components. Typically the frame element is removably attached to other frame elements such as by bolting. Most preferably, the frame element extends across the lateral width of the vehicle, although in some embodiments this is not required. Further, the frame element is preferably part of a modular combination which is incorporated into the vehicle.

Several embodiments of this invention have been disclosed, however, a worker of ordinary skill in this art would recognize that various modifications would come within the scope of this invention. For that reason, the following claims should be studied to determine the true scope and content.

## Claims

1. A vehicle frame component and suspension assembly comprising:
a vehicle structural frame component having an internal bore; and
a suspension component received within said bore, and said suspension component being part of a suspension for a vehicle wheel.

2. An assembly as recited in Claim 1, wherein said suspension component extends outwardly of said bore to be connected to said vehicle wheel.

3. An assembly as recited in Claim 2, wherein said vehicle frame component extends between two lateral sides of a vehicle, and receives suspension components associated with each of said two lateral sides.

4. An assembly as recited in any preceding Claim, wherein a coil spring is received within said bore.

5. An assembly as recited in Claim 3 or Claim 4, wherein a coil spring drives a piston relative to said frame component and said piston is operatively connected to said wheel through a linkage.

6. An assembly as recited in Claim 5, wherein said spring drives said piston outwardly of said bore and toward said vehicle wheel.

7. An assembly as recited in any preceding Claim, wherein said frame component is part of an engine cradle.

8. An assembly as recited in any one of Claims 1 to 5, wherein said frame component is a part of a rear frame module.

9. An assembly component as recited in any one of Claims 1 to 5, wherein said frame component is part of a corner module of one lateral side of a vehicle.

10. An assembly as recited in Claim 6, wherein a divider is placed within said frame component and divides said frame component into two lateral sides with fluid chambers being defined on each of said two lateral sides.

11. An assembly as recited in Claim 10, wherein pistons are associated with each of said fluid chambers, and said fluid chambers drive said pistons outwardly of said bore.

12. An assembly as recited in Claim 11, wherein a gas spring is associated with said cylinder and the flow of gas into said cylinder is provided from said gas spring.

13. An assembly as recited in Claim 12, wherein an electronically controlled valve is positioned to control the flow of fluid from said gas spring into said chamber.

14. An assembly as recited in any preceding Claim, wherein said frame extends between two lateral sides of said vehicle and a divider divides said frame into two sides, pistons movable within each of two sides.

15. An assembly as recited in Claim 14, wherein flow passages communicating fluid chambers on each of said two sides with each other to transmit movement of one of said pistons into fluid flow to a chamber associated with the other, and to cause relative movement of said other piston.

16. An assembly as recited in Claim 15, wherein there are fluid inner chambers defined between said divider and said piston, and outer chambers outwardly of each said piston relative to said divider, and each of said outer chambers being in communication with one of said inner chamber of an opposed piston such that movement of said piston in one direction causes relative movement of the other of said pistons in generally the same direction.

17. An assembly as recited in Claim 14, wherein a pump is associated with said frame member to provide the flow of fluid to the interior of said frame component and drive pistons outwardly, said pistons being connected through linkage to wheels such that the volume of flow into said chamber provides for movement of said wheels relative to said frame component.

18. An assembly as recited in Claim 17, wherein movement of said wheels causes a change in the vertical height of said vehicle.

19. An assembly as recited in Claim 18, wherein an electronic control controls said pump to achieve said desired position.

20. An assembly as recited in any preceding Claim, wherein said bore is utilized to provide an air reservoir, and said air reservoir being received from a source of compressed air and delivered to said suspension.

21. A module frame structure for a vehicle comprising:
a frame extending generally between two lateral ends;
a pair of wheels, with one of said wheels mounted to each of said lateral ends, and suspensions for mounting said frame element to said wheels at each of said lateral ends; and
said frame including a laterally extending generally elongated member having a bore, and a portion of said suspension for each of said wheels within said generally elongated frame portion bore.

22. A structure as set forth in Claim 21, wherein a single frame member extends between said lateral ends, and said portions of said suspension is mounted within said single frame member.

23. A structure as set forth in Claim 22, wherein said frame is part of an engine cradle.

24. A structure as recited in Claim 23, wherein an engine is mounted on said engine cradle.

25. A structure as recited in Claim 23 or Claim 24, wherein a fire wall and wheel house is connected with said engine cradle.

26. A structure as set forth in Claim 25, wherein a radiator support is also connected as a modular component with said fire wall, said wheel house, and said engine cradle.

27. A structure as recited in any one of Claims 21 to 26, wherein said frame component is a rear frame module.

28. A structure as recited in any one of Claims 21 to 27, wherein a coil spring is received within said bore.

29. A structure as recited in Claim 28, wherein said coil spring drives a piston relative to said frame component, said piston being operatively connected to one of said wheels through a linkage.

30. A structure as recited in Claim 29, wherein said spring drives the piston outwardly of said bore and toward said vehicle wheel.

31. An assembly as recited in any one of Claims 21 to 27, wherein a divider is placed within said frame component, dividing said frame component into two lateral sides with fluid chambers being defined on each of said two lateral sides.

32. A structure as recited in Claim 31, wherein pistons are associated with each of said fluid chambers, said fluid chambers driving said piston outwardly of said bore.

33. A structure as recited in Claim 32, wherein a gas spring is associated with each of said cylinders, the flow of gas into said cylinder being controlled by said gas spring.

34. A structure as recited in Claim 33, wherein an electronically controlled valve is positioned to control the flow of fluid from said gas spring to said chamber.

35. A structure as recited in any one of Claims 21 to 34, wherein said frame extends between two lateral sides of a vehicle, a divider dividing same frame into two sides, pistons movable within each of said two sides, and flow passages communicating fluid chambers on each of said two sides with each other to transmit movement of one of said pistons into fluid flow to a chamber associated with the other, and to cause relative movement of said other piston.

36. A structure as recited in Claim 35, where there are fluid inner chambers defined between said divider and said piston, and outer chambers outwardly of said piston relative to said divider and each of said outer chambers being in communication with one of said inner chambers of an opposed piston such that movement of said piston in one direction causes relative movement of the other of said pistons in generally the same direction.

37. A structure as set forth in any one of Claims 29 to 30 or 32 to 36, wherein a pump is associated with said frame member to provide flow of fluid to the interior of said frame component and drives said pistons outwardly, said pistons being connected to said wheels through a linkage such that the volume flowing to said chambers and subsequent movement of said pistons provides for movement of said wheels relative to said frame component.

38. A structure as recited in Claim 37, wherein movement of said wheels causes a change in the vertical height of said wheels relative to said frame component, and thus allows adjustment of the vertical height of the vehicle receiving said structure.

39. A structure as recited in any one of Claims 21 to 38, wherein said suspension component is an air reservoir, said air reservoir communicating with the source of compressed air, and delivering said compressed air from said reservoir to said suspension component.

40. An engine cradle for a vehicle comprising:
an engine cradle for extending longitudinally and generally between lateral sides of a vehicle which is to receive said cradle;
a pair of wheels, with one of said wheels mounted adjacent each of said lateral sides, and suspensions for mounting said frame to said wheels at each of said lateral sides; and
said cradle including a laterally extending generally elongated member having a bore, and a portion of said suspension for each of said wheels within said frame portion bore.

41. An engine cradle as recited in Claim 40, wherein a single laterally extending elongated member receives portions of said suspension for each of said wheels.

42. An engine cradle as recited in Claim 40 or claim 42, wherein a divider within said single frame element divides said bore into two chambers.

43. An engine cradle as recited in any one of Claims 40 to 42, wherein an engine is received on said engine cradle.

44. A structure as recited in any one of Claims 40 to 43, wherein a fire wall and wheel house is connected with said engine cradle.

45. A structure as set forth in Claim 44, wherein a radiator support is also connected as a modular component with said fire wall, said wheel house, and said engine cradle.

46. A module rear frame structure for a vehicle comprising:
a rear frame element for extending generally between lateral sides of a vehicle;
a pair of wheels, with one of said wheels mounted to each of said lateral sides, and suspensions for mounting said frame to said wheels at each of said lateral sides; and
said frame including a laterally extending generally elongated member having an inner bore, and a portion of said suspension for each of said wheels mounted within said frame bore portion.

47. A module rear frame structure as recited in Claim 46, wherein a single frame element extends between both of said portions of said suspension.

48. A comer frame structure for a vehicle comprising:
a frame element extending generally;
a wheel mounted to said frame element, and a suspension for mounting said frame to said wheel; and
said frame including a laterally extending generally elongated member having an inner bore, and a portion of said suspension mounted within said frame portion bore.

49. A vehicle frame component comprising:
an elongate frame body having a hollow bore;
at least one wheel, with said wheel being associated with a side of said frame body;
at least one suspension component associated with said side, said suspension component being provided with compressed air; and
a source of compressed air delivering compressed air to said bore of said frame component, said bore of said frame component being connected for delivering said compressed air to said suspension component.

50. A frame as recited in Claim 49, wherein said frame body extends between two ends, wheels being associated with each of said two ends, said at least one suspension component including a suspension component associated with each of said ends, and said air reservoir providing compressed air to each of said suspension components.
